(19) Europäisches Patentamt
European Patent Office
Office européen des brevets

(11) **EP 2 067 069 B1**

(12) **EUROPÄISCHE PATENTSCHRIFT**

(45) Veröffentlichungstag und Bekanntmachung des Hinweises auf die Patenterteilung:
**26.02.2014 Patentblatt 2014/09**

(51) Int Cl.:
***G02B 6/255*** *(2006.01)*

(21) Anmeldenummer: 07820975.6

(22) Anmeldetag: **05.10.2007**

(86) Internationale Anmeldenummer:
**PCT/EP2007/060602**

(87) Internationale Veröffentlichungsnummer:
**WO 2008/040806 (10.04.2008 Gazette 2008/15)**

(54) **GERÄT UND VERFAHREN ZUM THERMISCHEN VERBINDEN VON LICHTWELLENLEITERN**

DEVICE AND METHOD FOR THERMALLY CONNECTING OPTICAL FIBERS

APPAREIL ET PROCÉDÉ POUR UNE LIAISON THERMIQUE DE FIBRES OPTIQUES

(84) Benannte Vertragsstaaten:
**DE FR GB**

(30) Priorität: **06.10.2006 DE 102006047425**

(43) Veröffentlichungstag der Anmeldung:
**10.06.2009 Patentblatt 2009/24**

(73) Patentinhaber: **CCS Technology, Inc.
Wilmington, DE 19803 (US)**

(72) Erfinder: **CONTAG, Karsten
81373 München (DE)**

(74) Vertreter: **Epping - Hermann - Fischer
Patentanwaltsgesellschaft mbH
Ridlerstrasse 55
80339 München (DE)**

(56) Entgegenhaltungen:
EP-A- 0 215 145        EP-A- 1 255 139
DE-A1- 19 746 080      GB-A- 2 420 633
JP-A- 2000 275 111     US-A1- 2004 091 219

**Beschreibung**

Hintergrund der Erfindung

Die Erfindung betrifft das Gebiet des Verbindens von Lichtwellenleitern. Die Erfindung betrifft im Besonderen ein Gerät, um Enden von Lichtwellenleitern mittels eines thermischen Vorgangs miteinander zu verbinden. Die Erfindung betrifft außerdem ein entsprechendes Verfahren.
Geräte zum Verbinden von Lichtwellenleitern mittels Wärmeeinwirkung sind allgemein bekannt. Bei solchen Spleißgeräten werden die Faserenden der zu verspleißenden Lichtwellenleiter erwärmt, sodass diese miteinander verschmelzen können. Dabei ist gewünscht, dass die resultierende Dämpfung der Spleißverbindung möglichst niedrig ist. Hierzu wird je nach Gerätetyp unterschiedlicher Aufwand betrieben, indem beispielsweise die zu verspleißenden Faserenden zueinander ausgerichtet werden und der Spleißvorgang an die durch die Umgebung bedingten Gegebenheiten angepasst wird, um mit dem gegebenen Aufwand eine möglichst geringe durch die Spleißverbindung bedingte Dämpfung für das sich in der Faser ausbreitende Licht zu erzielen. Zum Schmelzen der Faserenden kann beispielsweise ein Lichtbogen, eine Glimmentladung, ein Laserstrahl oder ein Widerstandsdraht in Form beispielsweise einer Heizwendel verwendet werden.
Neuerdings sind Spleißgeräte gefragt, die kostengünstig, herstellbar sind und in der Anwendung möglichst betriebssicher, einfach zu bedienen und wartungsarm sind, wobei dennoch die Qualität der erzeugten Spleißverbindung möglichst hohen Ansprüchen genügen soll. Solche Geräte werden beispielsweise zur Installation von Lichtwellenleitern in Gebäuden oder zum Anschluss der Gebäude per Lichtwellenleiter an das bestehende Netz verwendet. Kennzeichnend für solche Geräte ist ein geringes Gewicht, eine möglichst einfache und robuste Mechanik und Elektronik im Gerät sowie ein möglichst hoher Automatisierungsgrad während der Erzeugung der Spleißverbindung.
Beispielsweise ist in der WO 2007/019843 ein Spleißgerät beschrieben, das zum Ausrichten der Faserenden zueinander elektromechanische Motoren, beispielsweise Schrittmotoren verwendet sowie eine mechanische Untersetzung. Die Schrittmotoren und die Untersetzung sind kostengünstig erhältlich, wobei jedoch Kompromisse bei der Positionierungsgenauigkeit dieser Mechanik akzeptiert werden müssen. Bei einem solchen Spleißgerät verbleibt in der Regel ein Restversatz in Betrachtungsrichtung senkrecht zur Längsachse der Lichtwellenleitern. Durch die beschränkte Genauigkeit der genannten Positioniereinrichtung in der Größenordnung von etwa 1 Mikrometer (μm) lässt sich eine exakte Ausrichtung der Fasern nur zufällig erreichen, im Allgemeinen verbleibt ein Restversatz. Der Schweißvorgang wird bei solchen Geräten mit festem Schweißstrom bei fester Schweißzeit durchgeführt. Diese Einstellung wurde nur für einen typischen anfänglichen Versatz als optimal festgelegt, so dass davon abweichende anfängliche Versatzwerte nicht individuell behandelt werden. Insbesondere wird keine Anpassung der Schweißparameter vorgenommen.
Herkömmliche Spleißgeräte, beispielsweise wie in der US 6,230,522 beschrieben verwenden eine Versatzreduzierung, um zur Anpassung auf eine Spleißumgebung das Gerät und dessen Spleißparameter zu justieren, und behalten den daraufhin festgelegten Parametersatz für die Steuerung des nächsten Spleißvorgangs und weiterer Spleißvorgänge unverändert bei. Hierzu wird ein definierter Abstand der zu verbindenden Fasern eines Testspleißes eingestellt, die Faserenden werden erwärmt, und ein verbleibender Restversatz der verbundenen Fasern wird ermittelt. Ein Zusammenhang, der eine Stromkorrektur in Abhängigkeit von einem verbleibenden Restversatz angibt, kann im Gerät gespeichert werden. Diese Geräte erfordern daher aufwändige Erfassungs- und Ausrichtungselektronik sowie eine aufwändige Mechanik, um stets sicherzustellen, dass zum Beginn des normalen Spleißvorgangs die Lichtwellenleiter möglichst genau und möglichst reproduzierbar zueinander ausgerichtet sind. Solche aufwändigen Positionierungssysteme verwenden beispielsweise Piezoelemente auf Basis piezoelektrischer Keramiken, die eine Positionierung der Kerne der zu verschweißenden Glasfasern in zwei Achsen ermöglichen.
Ein weiteres herkömmliches Spleißgerät ist in der GB 2 420 633 beschrieben.
Es ist daher wünschenswert, bei einem Spleißgerät der eingangs genannten Art, das nur eine relativ ungenaue Positionierung der Enden der Lichtwellenleiter erreichen kann, dennoch eine Spleißverbindung guter Qualität zu ermöglichen.

Kurze Darstellung der Erfindung

Das Gerät gemäß der Erfindung ist in Anspruch 1 definiert, das erfindungsgemäße Verfahren in Anspruch 8.
In einer Ausführungsform weist ein Gerät zum thermischen Verbinden von jeweiligen Enden von mindestens zwei Lichtwellenleitern auf: je eine einer der Lichtwellenleiter zugeordnete Positionierungseinrichtung, durch die die Enden relativ zueinander in eine Position gebracht werden, die ein durch Wärmeeinwirkung bewirktes Verbinden ermöglicht; eine Beobachtungseinrichtung, durch die ein relativer Versatz der Enden der zu verbindenden Lichtwellenleiter ermittelt wird; einen Speicher, durch den ein vorbestimmter Zusammenhang zwischen einem möglichen Versatz und einem die Wärmeeinwirkung steuernden Parameter bereitgestellt ist; eine thermische Einrichtung, durch die das Verbinden der Enden der Lichtwellenleiter in Abhängigkeit von einem aus dem Speicher abgegebenen Wert bewirkt wird.

Das Gerät akzeptiert einen anfänglichen Restversatz der zu verspleißenden Lichtwellenleiterenden. Zum Positionieren der Faserenden können entsprechende Positionierungselemente mit Nuten vorgesehen sein, in welche die Faserenden abgelegt werden. Die Nuten können lagemäßig fixiert zueinander sein. Es ist auch möglich, dass eine gewisse Grobausrichtung der Faserenden erfolgt, wobei die Positionierungsgenauigkeit dennoch so ist, beispielsweise im Bereich von größer etwa 1 μm bis zu 10 μm, dass mit einem lateralen Versatz der Faserenden zu rechnen ist.

Das Gerät erfasst nunmehr den Versatz der Außenkonturen der Lichtwellenleiter gemäß dem Ausführungsbeispiel, bevor die Lichtwellenleiter miteinander verschweißt werden, und ermittelt daraufhin aufgrund eines vorgegebenen im Gerät gespeicherten Zusammenhangs eine optimale Steuerung eines oder mehrerer Parameter des Spleißvorgangs. Beispielsweise bei Verwendung eines Spleißgeräts mit Lichtbogen bzw. Glimmentladung wird die Schweißzeit, beispielsweise die Betriebszeit, während der der Lichtbogen aktiv ist, aufgrund des im Gerät gespeicherten Zusammenhangs in Abhängigkeit von dem ermittelten Versatz festgelegt. Zusätzlich oder auch alternativ kann die Stromstärke zur Versorgung der Lichtbogenelektroden eingestellt werden.

In einer Ausführungsform wird beispielsweise herstellerseitig oder auch vom Anwender einstellbar eine gewünschte für die zu erstellende Spleißverbindung erforderliche Dämpfung am Gerät festgelegt. Daraufhin ermittelt das Gerät aufgrund eines gemessenen Versatzes der Lichtwellenleiter vor dem Verbindungsvorgang automatisch aus dem im Gerätespeicher abgelegten genannten Zusammenhang die optimale Schweißzeit. Beispielsweise sind verschiedene Zusammenhänge, die jeweils einer gewünschten vorzugebenden Dämpfung zugeordnet sind, im Gerät gespeichert und werden aufgrund der Vorgabe durch den Hersteller oder Bediener entsprechend aktiviert. Unterschiedliche Dämpfungen erfordern unterschiedliche Schweißstromstärken, so dass die zwischengespeicherten Zusammenhänge nach der Dämpfung bzw. nach der Schweißstromstärke parametrisiert sind. Dies kann bedeuten, dass für je eine gegebene Schweißstromstärke ein zugeordneter Zusammenhang der genannten Art gespeichert ist.

Der gespeicherte vorbestimmte Zusammenhang zwischen möglichem Versatz der Außenkonturen der noch unverbundenen Lichtwellenleiter vor deren Verschweißen und dem davon abhängig gewählten Spleißparameter, beispielsweise die Versorgungsstromstärke der Wärmeeinrichtung des Spleißgeräts, kann in Form einer Wertetabelle abgespeichert sein oder in Form einer Berechnungsvorschrift, beispielsweise einer Berechnungsformel, etwa in Form einer Gleichung für eine Gerade oder eine andere mathematische Kurve. Durch Eingabe des aktuell gemessenen Faserversatzes lässt sich direkt der Parameter ermitteln, nach-dem beispielsweise vorher durch Vorgabe einer gewünschten Dämpfung einer von möglichen gespeicherten Zusammenhängen festgelegt wurde.

Gemäß einer Ausführungsform umfasst ein Verfahren zum thermischen Verbinden von jeweiligen Enden von mindestens zwei Lichtwellenleitern: Positionieren der Enden der mindestens zwei Lichtwellenleiter relativ zueinander, so dass ein Verbinden durch Wärmeeinwirkung ermöglicht ist; Aufnehmen eines Abbildes der Enden der mindestens zwei Lichtwellenleiter; Ermitteln eines Versatzes zwischen den Enden der mindestens zwei Lichtwellenleiter; Ausgeben eines Werts für einen Parameter aus einem Speicher, durch den eine Abhängigkeit zwischen einem möglichen Versatz und einem die Wärmeeinwirkung beeinflussenden Parameter bereitgestellt ist; Ansteuern einer Wärmequelle in Abhängigkeit von dem Wert für den Parameter, um die Enden der mindestens zwei Lichtwellenleiter zu verbinden.

Kurze Beschreibung der Figuren

Nachfolgend wird die Erfindung anhand eines in den Figuren der Zeichnung dargestellten Ausführungsbeispiels näher erläutert. Einander entsprechende Elemente in verschiedenen Figuren sind mit gleichen Bezugszeichen versehen.

Es zeigen:

Figur 1 ein Prinzipschaltbild von wesentlichen Elementen eines Spleißgeräts gemäß einer Ausführungsform.

Figur 2 eine Detaildarstellung der Enden von zwei zu verbindenden Lichtwellenleitern.

Figur 3 eine erläuternde Darstellung für den im Gerät der Figur 1 gespeicherten Zusammenhang zwischen Versatz und Schweißzeit.

Figur 4 verschiedene für unterschiedliche Schweißströme vorgesehene Zusammenhänge.

Figur 5 eine repräsentative Darstellung für den im Gerät der Figur 1 gespeicherten Zusammenhang.

Detaillierte Beschreibung von Ausführungsformen der Erfindung

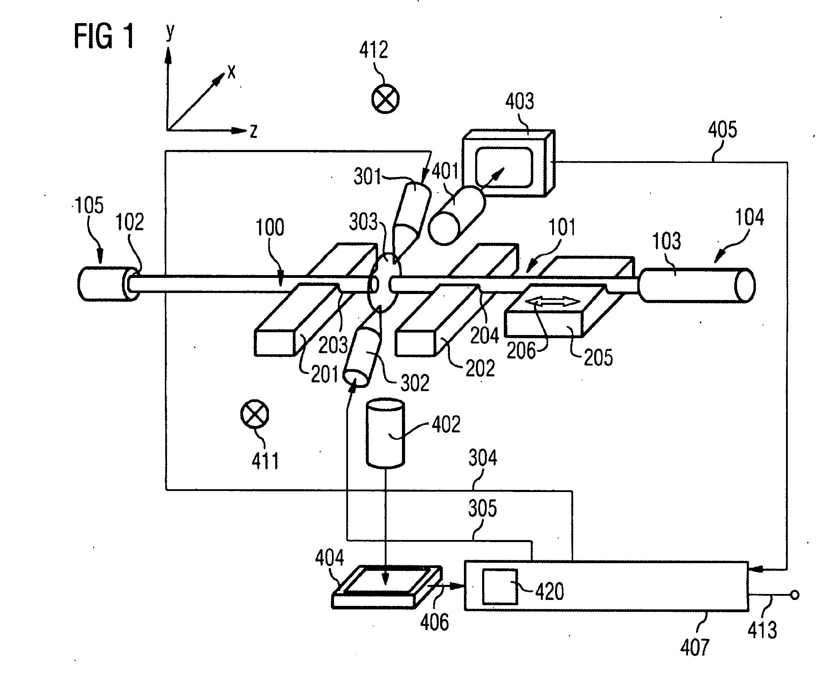

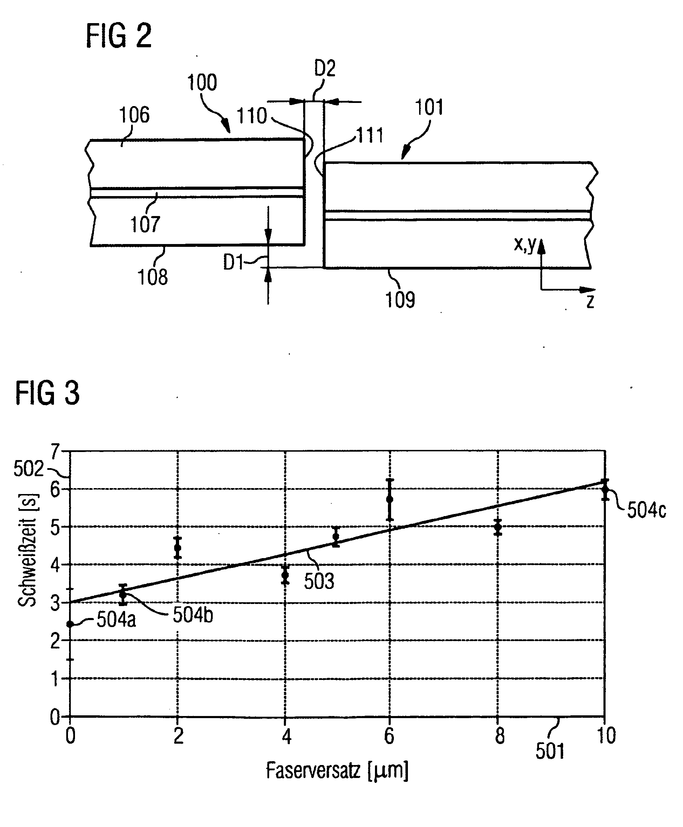

Das in Figur 1 dargestellte Spleißgerät wird dazu verwendet, um die Enden zweier Lichtwellenleiter 100, 101, die Lichtleitfasern sein können, durch thermische Einwirkung miteinander zu verbinden. Hierzu wird eine Glimmentladungszone oder Lichtbogenzone 303 erzeugt, die die einander gegenüber liegenden Enden der Lichtwellenleitern anschmilzt. Die Lichtwellenleitern werden aufeinander zu bewegt und verbinden sich dadurch. Die Lichtwellenleitern sind beispielsweise Glasfasern mit einem oder mehreren Licht führenden Kernen. Das Faserende 100 entspringt einem Lichtwellenleiter 105, der von einer Hülle 102 umgeben ist, die am Ende 100 entfernt worden ist, sodass dort im Wesentlichen nur der Licht leitende Faserkern 107 umgeben von der Glashülle 106 mit unterschiedlichem Brechungsindex (Figur 2) vorliegt. Der Aufbau des Endes des anderen Lichtwellenleiters 101 ist entsprechend. Als Lichtwellenleiter eignen sich alle bekannten Arten von Lichtwellenleitern, insbesondere jedoch Ein-Moden-Fasern oder NZDS-Fasern (Non-Zero-Dispersion-Shifted-Fasern). Die Lichtwellenleiter können optische Fasern wie Glasfasern sein.

Positionierungseinrichtungen 201, 202 weisen jeweilige Nuten 203 bzw. 204 auf, in denen die Faserenden abgelegt werden. Die Positionierungselemente 201, 202 und damit die Nuten 203, 204 können in einer Ausführungsform lagemäßig weitgehend exakt fixiert im Gerät vorliegen. Dann sind diese Nuten vorzugsweise zueinander weitgehend exakt ausgerichtet. Die V-förmig ausgebildeten Nuten können beispielsweise in Keramiken geschliffen oder auch in Silizium geätzt werden und sind somit herstellungsbedingt bis auf Bruchteile von Mikrometern gegeneinander ausgerichtet. Dennoch können dann die einander gegenüber liegenden miteinander zu verbindenden Flächen 110, 111 der Faserenden einen Versatz zueinander aufweisen, weil beispielsweise die Fasern einen unterschiedlichen Durchmesser aufweisen können und daher mit unterschiedlicher Höhe in der normalerweise V-förmigen Nut liegen. Andererseits können die Faserenden verschmutzt sein oder die Nuten können durch Staubpartikel verunreinigt sein. Es können auch eingefrorene Spannungen in einer der Fasern oder auf die Fasern durch Niederhaltemechanismen ausgeübte Kräfte zu einem Versatz und zu einer Lagesituation wie in Figur 2 dargestellt führen. Schließlich ist möglich, dass die Faserenden nicht völlig exakt innerhalb der Nut parallel zu den Nutoberflächen eingelegt sind.

Ein Versatz der zu verschweißenden Faserenden liegt im Allgemeinen auch dann vor, wenn die Positionierungselemente 201, 202 nicht völlig fixiert sind, sondern mittels einer Verstelleinrichtung relativ zueinander verschiebbar sind, die nur eine Grobverstellmöglichkeit bietet, die beispielsweise im Bereich von größer als 1 Mikrometer ($\mu$m) liegt. Die Positionierungseinrichtungen 201, 202 können wie in der DE 102005038937.6 ausgeführt sein und können einen elektrisch betriebenen Schrittmotor umfassen, der mittels einer Spindel oder eines anderen Übersetzungsgetriebes aus der Motorumdrehung eine Verschiebemöglichkeit in x-Richtung erzeugt. Die Verbindung aus Spindel/Getriebe und Schrittmotor weist derzeit grundsätzlich eine relativ hohe Positionierungsgenauigkeit auf, die allerdings ungenauer ist als die mit einer Piezokeramik erreichbare Positionierungsgenauigkeit, die in der Größenordnung von etwa 0,06 $\mu$m bis 0,1 $\mu$m liegt. Die genannte Schrittmotormechanik liefert eine Positionierungsgenauigkeit von im niedrigsten Fall 1 $\mu$m und typischerweise von 5 bis 6 $\mu$m.

Das Spleißgerät in Figur 1 weist nunmehr je eine Kamera in x-Richtung und y-Richtung 401 bzw. 402 auf, durch die die Umgebung innerhalb der Glimmentladungszone 303 bildmäßig erfasst werden kann. Die Kameras 401, 402 sind beispielsweise Charged Coupled Devices (CCD), die ein in Bildpunkte aufgelöstes Bild erfassen und digital bereitstellen. Jeweilige Lichtquellen 411, 412 sind den CCD-Arrays 401 bzw. 402 zugeordnet und beleuchten die Glimmentladungszone 303.

Die Kameras 401, 402 erzeugen jeweilige Lagebilder 403 bzw. 404, die in einer beispielsweise durch einen Mikroprozessor abgewickelten Steuerung 407 des Spleißgeräts ausgewertet werden. Im Normalfall werden Lagebilder der Faserenden aus zwei unterschiedlichen Richtungen aufgenommen. In der Figur 1 sind dies die x-Richtung und die y-Richtung, die im 90 Grad-Winkel zueinander stehen. Die Richtungen können auch einen anderen Winkel einschließen. Weiterhin ist möglich, dass nur eine Kamera verwendet wird und durch eine entsprechende Optik, beispielsweise eine Spiegeloptik, die von den Lichtquellen 411, 412 erzeugten Lichtstrahlen so auf die Glimmentladungszone 303 gerichtet werden, dass die Aufnahme von Abbildern der Faserenden aus zwei verschiedenen Richtungen durch die genannte eine der Kameras aufgenommen wird. Beispielsweise wird eines der Abbilder in einem Teil der Kamera erfasst, das andere der Abbilder in einem anderen Teil der Kamera. Entsprechende Optiken sind dem Fachmann ausreichend bekannt, sodass diese hier nicht näher erläutert werden.

Das Spleißgerät weist weiterhin eine Verschiebungseinrichtung 205 auf, die längs der z-Richtung der Fasern, also in Faserlängsrichtung 206, eine Verschiebung bewirken kann. Dies ist dann erforderlich, wenn der Schweißvorgang bereits läuft und die angeschmolzenen Enden der Lichtwellenleitern während des Schweißvorgangs ineinander geschoben werden, um einen gewissen Überlapp zu erzeugen und Materialverlust aufgrund des Erwärmungsvorgangs oder fehlendes Glasmaterial aufgrund nicht idealer Stirnflächen auszugleichen. Die Positioniergenauigkeit längs der Richtung 206 ist hinsichtlich der Genauigkeit relativ unkritisch.

Aufgrund der längs der Wirkverbindung 405, 406 an den Prozessor 407 des Spleißgerätes übermittelten Abbilder 403, 404 der Faserenden innerhalb der Glimmentladungszone 303 wird nunmehr, wie weiter unten ausführlicher beschrieben, ein Wert für einen Parameter ermittelt, der über Kopplungen 304, 305 die Elektroden 301 bzw. 302 ansteuert. Im Fall einer Glimmentladung bzw. eines Lichtbogens, um die Faserenden 100, 101 zu verschweißen, wird über die Kopplungen 304, 305 die Strommenge, beispielsweise die Zeitdauer der Stromzuführung, des den Elektroden 301, 302 zugeführten Stroms gesteuert. Der zugeführte Strom wird über die von den Elektroden 301, 302 erzeugte Glimmentladung bzw. den erzeugten Lichtbogen in eine zum Schweißen der Faserenden bereitstehende Wärmemenge umgewandelt. Je höher die Wärmemenge ist, desto weiter gleichen sich die in der x-y-Ebene zu einander lagemäßig versetzten Fasern während des Schweißvorgangs aufgrund des Selbstzentriereffekts aneinander an. Idealerweise liegt mit dem Abschluss des Schweißvorgangs kein Versatz mehr vor bzw. ist der Versatz so gering, dass eine gewünschte resultierende Dämpfung der Lichtausbreitung im Lichtwellenleiter erreicht wird bzw. eine festgelegte maximale Dämpfung unterschritten wird. Bei beispielsweise konstanter vorgegebener Stromstärke wird durch die Kopplungen 304, 305 die Zeitdauer, während der der Strom zugeführt wird, also die Schweißzeit gesteuert.

Grundsätzlich kann die Optimierung in verschiedenen Schritten ablaufen. Erfahrungsgemäß ist, um eine gewünschte maximale Dämpfung der zu erzeugenden Spleißverbindung nicht zu überschreiten, eine entsprechend geeignete Stromstärke erforderlich. Durch Festlegung der gewünschten maximalen Dämpfung am Anschluss 413, die die fertiggestellte Spleißverbindung erreichen oder unterschreiten soll, wird somit die Stromstärke für die Elektroden 301, 302 festgelegt. Die Eingabe der maximalen Dämpfung am Anschluss 413 kann werksseitig einmalig festgelegt werden oder bedarfsweise vom Bediener des Geräts über eine manuelle Eingabe festgelegt werden. Aufgrund des in den Abbildern 403, 404 zu ermittelnden Versatzes wird daraufhin durch den in der Steuerungseinrichtung 407 gespeicherten Zusammenhang die Steuerungsinformation für die Wirkverbindungen 304, 306 und die Spleißzeit bereitgestellt.

Im Gerät der Figur 1 wird wie anhand der Figur 2 dargestellt der Versatz D1 der Außenkonturen 108, 109 der Lichtleitfaserenden 100, 101 ermittelt. Da das Gerät den Versatz aus zwei verschiedenen Richtungen, beispielsweise x- und y-Richtung, die in einem spitzen Winkel, vorzugsweise 90 Grad zueinander versetzt sind, ermittelt, wird ein davon abgeleiteter Gesamtversatz festgestellt. Beispielsweise wird im Fall von 90 Grad zueinander versetzt liegenden Beobachtungsrichtungen der Gesamtversatz durch Wurzelbildung aus der Summe der Quadrate der gemessenen, den x- bzw. y-Richtungen zugeordneten Versatzwerte ermittelt. Je ein von einer Kamera aufgenommenes Abbild der Faserenden umfasst ein in Bildpunkte aufgelöstes Abbild der Faserenden, sodass beispielsweise durch eine Grauwertauswertung und ein Abzählen von Bildpunkten der Versatz D1 zwischen den Außenkonturen 108, 109 festgestellt wird. Während des Schweißvorgangs wird der Restversatz D1 durch den Selbstzentriereffekt der Material- und Oberflächenkräfte teilweise oder vollständig ausgeglichen.

Ergänzend wird erwähnt, dass die Fasern noch einen in z-Richtung verlaufenden Versatz D2 zwischen den stirnseitigen Enden 110, 111 der Lichtwellenleitern aufweisen. Dieser Versatz wird während des Schweißvorgangs durch die z-Positionierungseinrichtung 205 ausgeglichen, wobei sogar ein Überlapp der Faserenden erzeugt wird.

Der in der Steuerungseinrichtung 407 gespeicherte Zusammenhang zwischen Faserversatz und Schweißzeit kann wie in Figur 3 dargestellt repräsentiert werden. Die horizontale Achse 501 repräsentiert die möglichen in der Praxis zu erwartenden Werte für den Faserversatz, während an der vertikalen Achse 502 eine entsprechend zugeordnete Schweißzeit abgelesen werden kann. Der dargestellte Zusammenhang ist in Form einer Kurve, hier eine Gerade 503, dargestellt, die aufgrund von einzelnen Meß- oder Erfahrungswerten 504a, 504b, 504c usw. als Ausgleichsgerade ermittelt wurde. Die vorliegenden zu verschweißenden Fasern sind beispielsweise Fasern des Typs SMF 1528 mit 0,1 $\mu$m Exzentrizität von Corning, Incorporated. Die Gerade 503 wurde für einen Schweißstrom von 14,0 mA ermittelt. Damit lässt sich eine gewisse gewünschte Dämpfung der Spleißverbindung erreichen oder unterschreiten. Eine andere gewünschte maximale Zieldämpfung bedingt gegebenenfalls einen anderen Schweißstrom. Die Gerade, die einem solchen anderen Schweißstrom zugeordnet ist, wird im Allgemeinen eine andere vertikale Lage sowie eine andere Steigung aufweisen als die in Figur 3 dargestellte Gerade. Beispielsweise, liegt eine aufgrund von Messwerten ermittelte Ausgleichsgerade für einen Schweißstrom vom 13,0 mA in der Grafik oberhalb der Gerade 503 und weist eine größere Steigung auf als die Gerade 503. Aufgrund des in einem konkreten Fall ermittelten Faserversatzes kann dann anhand derjenigen Gerade, die der gewünschten Dämpfung bzw. dem vorgegebenen Strom zugeordnet ist, die optimale Schweißzeit ermittelt werden. Der aktuelle gemessene Faserversatz dient als Eingabewert, die Schweißzeit wird anhand der Gerade ermittelt und als Ausgabewert ausgegeben.

Die gezeigten Geraden werden aufgrund von Vorversuchen ermittelt. Hierzu wird ein Spleißgerät verwendet, bei dem ein vorgegebener Versatz zwischen den Fasern einstellbar ist. Der vorgegebene Versatz wird eingestellt und die integrierte Autofusionszeitsteuerung kann dabei jeweils die optimale Schweißzeit bestimmen. Die gemittelten optimalen Schweißzeiten, die sich dadurch ergeben, dass die niedrigste Dämpfung erreicht wird, werden in Abständen von 1,0 $\mu$m als Werte 504a, 504b, ..., 504c den entsprechenden Versatzwerten zugeordnet (Figur 3). Daraus wird die Ausgleichsgerade 503 ermittelt.

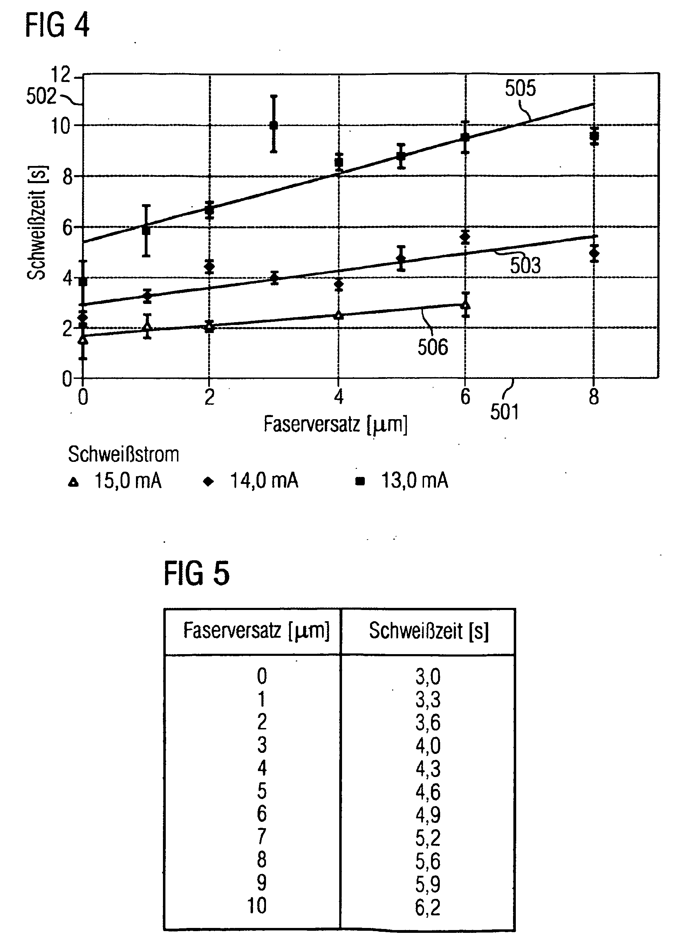

In Figur 4 sind verschiedene Zusammenhänge für unterschiedlichen Schweißstrom dargestellt. Die Gerade 503 in Figur 4 entspricht der Geraden 503 aus Figur 3. Die Gerade 505 ist für einen Spleißstrom von 13,0 mA vorgesehen. Die Gerade 506 ist für einen Schweißstrom von 15,0 mA vorgesehen. Man erkennt, dass sich bei einem Schweißstrom von beispielsweise 14,0 mA die optimale Schweißzeit von 3 Sekunden auf etwa 5 Sekunden erhöht, wenn der Faserversatz von 0 pm auf 6 $\mu$m ansteigt. Bei einem reduzierten Schweißstrom von 13,0 mA ist die Verlängerung der optimalen Schweißzeit größer. Die Gerade 505 liegt daher oberhalb, also bei höheren Werten für die Schweißzeit verglichen mit der Geraden 503. Bei einem Faserversatz von 6$\mu$ m beträgt die Schweißzeit 9 Sekunden bei einem Schweißstrom von 13,0 mA.

Grundsätzlich kann eine weitere Reduzierung der Dämpfung der fertiggestellten Spleißverbindung insbesondere bei größeren Faserversätzen mit einem reduzierten Schweißstrom erreicht werden. Eine solche weitere Reduzierung der Dämpfung bei größeren Faserversätzen ist mit einer Verlängerung der Schweißzeit verbunden. Umgekehrt führt die Verwendung eines höheren Spleißstroms bei großen Faserversätzen zu einer höheren Dämpfung. Es wird daher in einer Ausführungsform ein bestimmter Dämpfungsschwellwert festgelegt, der für die Spleiße erreicht werden soll. Der Dämpfungswert wird am Gerät über den Anschluss 413 eingegeben.

Zum Erreichen oder Unterschreiten einer maximal zulässigen Spleißdämpfung muss der Schweißstrom geeignet eingestellt werden. Beispielsweise wird am Anschluss 413 eine Dämpfung vom Bediener eingegeben oder werksseitig für einen Anwendungsfall fest programmiert. Ein geeigneter Schweißstrom zum Erreichen einer vorgegebenen maximalen Dämpfung hängt vom anfänglichen festgestellten Versatz der Fasern ab. Es ist im Allgemeinen günstiger, bei einem niedrigeren Versatz einen hohen Schweißstrom zu verwenden und bei einem größeren Versatz einen niedrigeren Schweißstrom zu verwenden. Durch einen höheren Schweißstrom wird gleichzeitig die Schweißzeit verringert. Es bietet sich daher an, einen bestimmten Dämpfungsschwellwert festzulegen, der für alle Spleiße erreicht werden soll. Wenn nun ein anfänglicher Versatz ermittelt wird, für den die gewünschte Dämpfung mit dem gerade eingestellten Schweißstrom nicht erreichbar ist, wird entsprechend ein anderer Schweißstrom eingestellt und damit ein anderer der in Figur 4 dargestellten Zusammenhänge ausgewählt und daraus die sich ergebende Schweißzeit ermittelt, so dass der vorgegebenen maximale Dämpfungswert erreicht oder unterschritten wird. Beispielsweise kann diese Steuerung umfassen, dass für niedrige anfängliche Versatzwerte ein hoher Spleißstrom eingestellt wird, für mittlere Versatzwerte ein mittlerer Spleißstrom eingestellt wird und für hohe Versatzwerte ein demgegenüber niedrigerer Spleißstrom eingestellt wird. In einer Wertetabelle zusammengefasst ergibt dies:

| Versatz | Schweißstrom |
| --- | --- |
| $\leq 5\ \mu m$ | 15,0 mA |
| 6 ... 7 $\mu m$ | 14,0 mA |
| $\geq 8\ \mu m$ | 13,0 mA |

Aus den in Figuren 3 und/oder 4 darstellten Kurven wird dementsprechend die erforderliche Schweißzeit ermittelt. Um eine maximale vorgegebene Dämpfung zu erreichen oder zu unterschreiten wird eine Steuerungskennlinie angewandt, bei der in Abhängigkeit vom festgestellten anfänglichen Versatz der einzustellende Spleißstrom stufenweise abnimmt.

In der Praxis ist der in Figur 3 idealisiert dargestellte Zusammenhang in der Steuerungseinrichtung 407 in einem dort vorhandenen Speicher 420 beispielsweise als Tabelle wie in Figur 5 dargestellt abgespeichert. Entsprechende Tabellen (nicht gesondert dargestellt) sind im Speicher 420 für die Kurven 505, 506 der Figur 4 abgelegt. Der Speicher 420 enthält beispielsweise verschiedene diskrete Eingangswerte 0 ... 10 in der Einheit $\mu m$, denen jeweils eine Schweißzeit 3,0 ... 6,2 in der Einheit s (Sekunden) zugeordnet ist. Nicht notwendigerweise muss der Zusammenhang eine wie in Figur 3 dargestellte Grade 503 sein. Es kann eine Kurve beliebiger höherer Ordnung oder eine völlig aufgrund von Erfahrungswerten festgelegte Kurve sein. Wenn der durch die Abbilder 403, 404 ermittelte Versatz zwischen zwei gespeicherten Werten für den Faserversatz liegt, ist eine Interpolation erforderlich.

Alternativ zu dem in Figur 5 dargestellten Zusammenhang kann gleichwertig auch eine Berechnungsvorschrift im Speicher 420 gespeichert werden. Im vorliegenden Fall kann die dem in Figur 5 dargestellten Zusammenhang entsprechende Berechnungsvorschrift

```
Schweißzeit (in s) = 0,32 s/µm

                     x Faserversatz (in µm)

                     + 3,0 s
```

verwendet werden (s: Sekunden). Für die Kurven 505, 506 sind jeweils entsprechende Berechnungsvorschriften möglich.

Im Ausführungsbeispiel wird aus den längs der x-Richtung und längs der y-Richtung aufgenommenen Bildern 403 bzw. 404 der jeweilige genannte Gesamtversatz ermittelt und als Eingangsgröße für den im Speicher 420 abgespeicherten Zusammenhang verwendet und dort entweder als Eingangswert der Tabelle (linke Spalte der Figur 5) oder als Eingabewert für die Berechnungsvorschrift verwendet, sodass daraus eine Schweißzeit in Sekunden ermittelt wird. Die Steuerungseinrichtung 407 und die Kopplungen 304, 305 schalten den Schweißstrom mit Stärke von beispielsweise 14,0 Milliampere (mA) zum Verbinden von SMF 1528 Licht-Leitfaserenden an den Elektroden 301, 302 während dieser Schweißzeit aktiv. Wenn der festgestellte Anfangsversatz als Eingabewert oder ein den Anfangsversatz repräsentierender Wert dem Speicher mitgeteilt wird, wird davon abhängig aus dem Speicher im beschriebenen Ausführungsbeispiel die Schweißzeit oder ein die Schweißzeit repräsentierender Wert ausgegeben.

Der Speicher 420 bevorratet eine Vielzahl von unterschiedlichen Schweißströmen zuordenbaren Zusammenhängen. Je nach Vorgabe eines gewünschten Schweißstroms wird einer dieser Zusammenhänge für den beschriebenen Steuerungsvorgang ausgewählt.

Anstelle der beschriebenen Elektroden 301, 302 zur Erzeugung eines Lichtbogens bzw. einer Glimmentladung kann in anderen Ausführungsformen eine Lasereinrichtung beispielsweise mit einer Laserdiode verwendet werden. Ein Laserstrahl wird erzeugt und mittels einer Optik abgelenkt, sodass er die Spleißstelle mit Wärmeleistung versorgt, sodass das Verschweißen der Faserenden ermöglicht wird. In diesem Fall wird bei vorgegebenem Strom für den Laser die Betriebszeit des Lasers aufgrund des im Speicher 420 abgelegten Zusammenhangs anhand des festgestellten Restversatzes der zu verspleißenden Fasern ermittelt. Weiterhin denkbar ist eine Heizwendel in einem so genannten Filament-Spleißgerät, die einen Widerstandswendel umfasst, der eine Wärmemenge erzeugt, die ausreicht, um die Faserenden miteinander durch Schmelzen zu verbinden. Ebenfalls bei durch eine vorgegebene Dämpfung festgelegtem Strom wird die Betriebszeit, während der der Strom zur Wärmeerzeugung durch die Heizwendel zugeführt wird, aus dem im Speicher 420 abgelegten Zusammenhang ermittelt. Alternativ ist auch möglich, sowohl den Strom als auch die Schweißzeit, also die Stromzuführungszeit, aufgrund des im Speicher 420 abgelegten Zusammenhangs aufgrund des ermittelten Versatzes einzustellen. Im Allgemeinen umfasst die Erfindung, dass aufgrund der durch die Kameras 401, 402 aufgenommenen Abbildungen der Faserenden ein Restversatz ermittelt wird und daraufhin aufgrund eines im Speicher 420 abgelegten Zusammenhangs allgemein ein die Wärmeeinwirkung in der Spleißzone steuernder Parameter ermittelt wird.

Das beschriebene Ausführungsbeispiel zeigt ein Faserpaar 100, 101, welches miteinander zu verbinden ist. Die Erfindung ist ebenfalls anwendbar auf Bändchen-Spleißgeräte, in denen anstelle der einzelnen Fasern 100, 101 Enden von Faserbändchen, welche beispielsweise vier, sechs, acht oder zwölf Faserpaare umfassen können, miteinander verschweißt werden. Hierzu sind entsprechende Auswerteverfahren bekannt, um durch die Kameras 401, 402 den Versatz zwischen den zu verschweißenden Enden zweier Faserbändchen zu ermitteln. Im vorliegenden Beispiel wird dann der maximale Versatz, der unter allen an den jeweiligen zu verbindenden Faserpaaren innerhalb der Bändchen auftritt, ermittelt, um daraufhin aus dem maximalen Versatzwert aufgrund des im Speicher 420 abgelegten Zusammenhangs die optimale Schweißzeit zu ermitteln. Alternativ kann auch ein mittlerer Versatz sämtlicher zwischen den Faserpaaren der beiden zu verschweißenden Bändchen gemessenen Versatzwerte verwendet werden. Zur Mittelwertbildung eignet sich die Bildung eines arithmetischen Mittelwerts, eines geometrischen Mittelwerts oder eines geeignet gewichteten Mittelwerts.

Eine zusätzliche Dämpfungsreduktion kann durch Pulsen erfolgen. Hierzu wird in einem an den bisher beschriebenen Spleißprozess anschließenden Vorgang mehrfach der Lichtbogen pulsartig gezündet. Die Dämpfung lässt sich dadurch weiter verbessern, indem eine vorbestimmte Anzahl von Stromimpulsen für entsprechende Lichtbogeneffekte erzeugt wird. Wichtig ist die Festlegung der optimalen Anzahl von Pulsen, wobei der zeitliche Abstand der Pulse sowie die Dauer der einzelnen Pulse einen untergeordneten Einfluss auf die Verbesserung der Dämpfung haben. Abhängig vom anfänglichen Faserversatz wird die geeignet festgelegte Anzahl von Stromimpulsen erzeugt. Bei einem Faserversatz von 1,5 $\mu$m sind zusätzlich nach dem Schweißen unter Anwendung der optimalen Schweißzeit gemäß einer der Kurven aus Figuren 3 bis 5, noch zusätzlich zwei Schweißstromimpulse geeignet, um die Dämpfung der erzeugten Spleißverbindung weiter zu erniedrigen. Bei einem anfänglichen Versatz von 3 $\mu$m sind etwa 3 Pulse erforderlich. Der Pulsstrom beträgt 16,0 mA, die Pulsdauer 3 Sekunden, die Pause-Zeitdauer zwischen zwei Pulsen 0,2 Sekunden im Ausführungsbeispiel. Diese Methode zur Dämpfungsreduktion ist besonders für das Spleißverbinden von so genannten NZDS-Fasern (Non-Zero-Dispersion-Shifted-Fasern) vorteilhaft.

Die Erfindung ist insbesondere anwendbar in Spleißgeräten, in denen die Faserenden mit einem nicht ausgleichbaren Restversatz positioniert sind. Der Spleißvorgang läuft automatisiert ab und erzeugt dabei eine optimierte Spleißverbindung mit möglichst niedriger Dämpfung.

**Patentansprüche**

1. Gerät zum thermischen Verbinden von jeweiligen Enden von mindestens zwei Lichtwellenleitern (100, 101) umfassend:

je einen einem ersten und einem zweiten Lichtwellenleiter zugeordnete Positionierungseinrichtung (201, 202), durch die die Enden des ersten und des zweiten Lichtwellenleiters relativ zueinander in eine Position gebracht werden, die ein durch Wärmeeinwirkung bewirktes Verbinden ermöglicht;
eine Beobachtungseinrichtung (401, 402), durch die ein relativer Versatz (D1) der Enden des ersten und des zweiten Lichtwellenleiters ermittelt wird; **gekennzeichnet durch** einen Speicher (420), **durch** den ein vorbestimmter Zusammenhang zwischen einem möglichen Versatz und einer zugeordneten Schweißzeit bereitgestellt ist, wobei im Speicher (420) der vorbestimmte Zusammenhang so gespeichert ist, dass bei einem höheren möglichen Versatz eine höhere Schweißzeit gegeben ist; und

eine thermische Einrichtung (301, 302), **durch** die das Verbinden der Enden des ersten und des zweiten Lichtwellenleiters in Abhängigkeit von einem aus dem Speicher in Antwort auf den ermittelten Versatz abgegebenen Wert für die Schweißzeit bewirkt wird.

2. Gerät nach Anspruch 1, bei dem die Positionierungseinrichtungen (201, 202) zueinander lagemäßig fixiert sind oder mit einer Stellgenauigkeit, die größer als 1 Mikrometer ist, zueinander quer zu einer Längsrichtung der Lichtwellenleiter (100, 101) grobverstellbar sind.

3. Gerät nach einem der Ansprüche 1 oder 2, bei dem der Speicher (420) eine gespeicherte Tabelle enthält, in der der Zusammenhang zwischen Werten von möglichem Versatz der Enden des ersten und des zweiten Lichtwellenleiters und zugeordneter Schweißzeit gespeichert ist.

4. Gerät nach einem der Ansprüche 1 oder 2, bei dem der Speicher (420) eine Berechnungsvorschrift enthält, durch die ein Zusammenhang zwischen Werten von möglichem Versatz der Enden des ersten und des zweiten Lichtwellenleiters und zugeordneter Schweißzeit gegeben ist.

5. Gerät nach einem der Ansprüche 1 bis 4, bei dem der Speicher (420) mehrere der genannten Zusammenhänge enthält, wobei jeder der Zusammenhänge einer anderen Dämpfung zugeordnet ist, und eine Eingabeeinrichtung (413) für einen Dämpfungswert vorgesehen ist, den die fertiggestellte Verbindung erreichen oder unterschreiten soll, oder wobei jeder der Zusammenhänge einem anderen Versorgungsstrom der thermischen Einrichtung (301, 302) zugeordnet ist und einer der Zusammenhänge ausgewählt wird.

6. Gerät nach einem der Ansprüche 1 bis 5, bei dem die thermische Einrichtung ein Elektrodenpaar (302, 302) aufweist, durch das ein Lichtbogen (303) oder eine Glimmentladung (303) erzeugt wird, oder eine Lasereinrichtung aufweist, um Enden des ersten und des zweiten Lichtwellenleiters zu schmelzen und zu verbinden, wobei durch eine Steuerungseinrichtung (407) die Zeitdauer gesteuert wird, während der Strom zur Bildung eines Lichtbogens bzw. einer Glimmentladung bzw. eines Laserlichtstrahls zugeführt wird.

7. Gerät nach einem der Ansprüche 1 bis 6, bei dem die Beobachtungseinrichtung mindestens eine Kamera (401, 402) umfasst, um den Versatz (D1) der Außenkonturen (108, 109) des ersten und des zweiten Lichtwellenleiters aus einer oder aus mindestens zwei verschiedenen Richtungen zu ermitteln.

8. Verfahren zum thermischen Verbinden von jeweiligen Enden von mindestens zwei Lichtwellenleitern (100, 101), umfassend:

Positionieren der Enden eines ersten und eines zweiten Lichtwellenleiters (100, 101) relativ zueinander, so dass ein Verbinden durch Wärmeeinwirkung ermöglicht ist;
Aufnehmen eines Abbildes (403, 404) der Enden des ersten und des zweiten Lichtwellenleiters;
Ermitteln eines Versatzes (D1) zwischen den Enden des ersten und des zweiten Lichtwellenleiters (100, 101);
**gekennzeichnet durch**
das Ausgeben eines Werts für eine Schweißzeit aus einem Speicher (420), **durch** den eine Abhängigkeit zwischen einem möglichen Versatz und eine zugeordnete Schweißzeit bereitgestellt ist, wobei im Speicher (420) der vorbestimmte Zusammenhang so gespeichert ist, dass bei einem höheren möglichen Versatz ein höherer Wert für die Schweißzeit gegeben ist; und das Ansteuern einer Wärmequelle (301, 302) in Abhängigkeit von dem Wert für die Schweißzeit, um die Enden des ersten und des zweiten Lichtwellenleiters zu verbinden.

9. Verfahren nach Anspruch 8, bei dem die Wärmequelle (301, 302) während der Schweißzeit betrieben wird, um die Enden des ersten und des zweiten Lichtwellenleiters zu verbinden.

10. Verfahren nach Anspruch 9, bei dem während der Schweißzeit ein Elektrodenpaar (301, 302) zur Erzeugung eines Lichtbogens (303) oder einer Glimmentladung (303) mit Strom versorgt wird oder ein Laserstrahl erzeugt wird oder eine elektrische Widerstandheizeinrichtung mit Strom versorgt wird.

11. Verfahren nach einem der Ansprüche 8 bis 10, bei dem in dem Speicher (420) eine Tabelle bereitgestellt wird, die einen Zusammenhang zwischen einem möglichen Versatz und einer zugeordneten Schweißzeit für das Betreiben der Wärmequelle angibt, oder eine Berechnungsvorschrift enthält, aus der in Folge Eingabe des ermittelten Versatzes eine zugeordnete Schweißzeit für das Betreiben der Wärmequelle (301, 302) berechnet wird.

12. Verfahren nach Anspruch 11, bei dem eine gewünschte zu erreichende Dämpfung für eine Verbindung zwischen dem ersten und dem zweiten Lichtwellenleiter eingegeben wird und in Abhängigkeit von der eingegebenen Dämpfung eine aus mehreren Tabellen ausgewählt wird, wobei jede der mehreren Tabellen den genannten Zusammenhang für eine andere Dämpfung enthält.

13. Verfahren nach einem der Ansprüche 8 bis 12, bei dem zum Ermitteln des Versatzes (D1) der Abstand zwischen Außenkonturen (108, 109) der Enden des ersten und des zweiten Lichtwellenleiter (100, 101) festgestellt wird.

14. Verfahren nach einem der Ansprüche 8 bis 12, bei dem im Anschluss an den Schritt des Ansteuerns einer Wärmequelle die Wärmequelle pulsweise betrieben wird und bei dem die Anzahl von Pulsen in Abhängigkeit von dem ermittelten Versatz festgelegt wird und vorzugsweise zwei oder drei Punkte umfasst.

**Claims**

1. A device for thermally connecting respective ends of at least two optical waveguides (100, 101), comprising:

   a positioning means (201, 202) which is associated to each of a first and a second optical waveguide and moves the ends of the first and the second optical waveguide relative to each other to a position which allows a connecting effected by the action of heat;
   an observation means (401, 402) which determines a relative offset (D1) of the ends of the first and the second optical waveguide; **characterized by**
   a memory (420) providing a predetermined correlation between a possible offset and an associated welding time, the predetermined correlation being stored in the memory (420) such that a longer welding time exists in case of a higher possible offset; and
   a thermal means (301, 302) effecting the process of connecting the ends of the first and the second optical waveguide as a function of a value for the welding time delivered from the memory in response to the determined offset.

2. The device according to claim 1, in which the positioning means (201, 202) are fixed in their position relative to each other or can be roughly adjusted relative to each other transversely to a longitudinal direction of the optical waveguides (100, 101) with a positioning precision larger than 1 micrometer.

3. The device according to any of the claims 1 or 2, in which the memory (420) holds a stored table in which the correlation between values of a possible offset of the ends of the first and the second optical waveguide and the associated welding time is stored.

4. The device according to any of the claims 1 or 2, in which the memory (420) holds a calculation rule which defines a correlation between values of a possible offset of the ends of the first and the second optical waveguide and the associated welding time.

5. The device according to any of the claims 1 to 4, in which the memory (420) holds several of the mentioned correlations, with each of the correlations being associated to a different attenuation, and an input device (413) for an attenuation value is provided, the finished connection being expected to achieve or fall below said attenuation value, or each of the correlations is associated to a different supply current of the thermal means (301, 302) and one of the correlations is selected.

6. The device according to any of the claims 1 to 5, in which the thermal means comprises a pair of electrodes (301, 302) generating an electric arc (303) or a glow discharge (303) or comprises a laser device to melt and connect ends of the first and the second optical waveguide, a controller (407) controlling the period of time during which the current for the formation of an electric arc or a glow discharge or a laser light beam is supplied.

7. The device according to any of the claims 1 to 6, in which the observation means comprises at least one camera (401, 402) to determine the offset (D1) of the outer contours (108, 109) of the first and the second optical waveguide from one or at least two directions.

8. A method of thermally connecting respective ends of at least two optical waveguides (100, 101), comprising:

positioning the ends of a first and a second optical waveguide (100, 101) relative to each other such that a connecting by the action of heat is made possible;

taking a picture (403, 404) of the ends of the first and the second optical waveguide;

determining an offset (D1) between the ends of the first and

the second optical waveguide (100, 101); **characterized by** outputting a value for a welding time from a memory (420),

the latter providing a correlation between a possible offset and an associated welding time, the predetermined correlation being stored in the memory (420) such that a higher value for the welding time exists in case of a higher possible offset; and

driving a heat source (301, 302) as a function of the value for the welding time in order to connect the ends of the first and the second optical waveguide.

9. The method according to claim 8, in which the heat source (301, 302) is operated during the welding time in order to connect the ends of the first and the second optical waveguide.

10. The method according to claim 9, in which, during the welding time, a pair of electrodes (301, 302) is supplied with electricity for generating an electric arc (303) or a glow discharge (303) or a laser beam is generated or an electric resistance heating means is supplied with electricity.

11. The method according to any of the claims 8 to 10, in which a table is provided in the memory (420), which table specifies a correlation between a possible offset and an associated welding time for operating the heat source or comprises a calculation rule from which, as a result of inputting the determined offset, an associated welding time for operating the heat source (301, 302) is calculated.

12. The method according to claim 11, in which a desired attenuation to be achieved is inputted for a connection between the first and the second optical waveguide and one of several tables is selected as a function of the inputted attenuation, with each of the several tables comprising said correlation for a different attenuation.

13. The method according to any of the claims 8 to 12, in which the distance between outer contours (108, 109) of the ends of the first and the second optical waveguide (100, 101) is established for determining the offset (D1).

14. The method according to any of the claims 8 to 12, in which the heat source is operated in a pulse mode after the step of driving the heat source, and in which the number of pulses is set as a function of the determined offset and preferably comprises two or three pulses.

**Revendications**

1. Appareil pour la liaison thermique d'extrémités respectives d'au moins deux fibres optiques (100, 101), comprenant:

respectivement un dispositif de positionnement (201, 202) affecté à une première et à une deuxième fibre optique, par lequel les extrémités de la première et de la deuxième fibre optique sont mises les unes par rapport aux autres dans une position qui permet une liaison provoquée par action de chaleur;

un dispositif d'observation (401, 402) par lequel un décalage relatif (D1) des extrémités de la première et de la deuxième fibre optique est déterminé;

**caractérisé par** une mémoire (420) par laquelle une relation prédéfinie entre un décalage possible et un temps de soudage affecté est mis à disposition, la relation prédéfinie étant mémorisée dans la mémoire (420) de telle façon qu'en cas de décalage possible plus élevé, un temps de soudage plus élevé soit donné; et

un dispositif thermique (301, 302) par lequel la liaison des extrémités de la première et de la deuxième fibre optique est provoquée en fonction d'une valeur pour le temps de soudage délivrée à partir de la mémoire en réponse au décalage déterminé.

2. Appareil selon la revendication 1, dans lequel les dispositifs de positionnement (201, 202) sont arrêtés l'un par rapport à l'autre en termes d'emplacement ou sont approximativement réglables l'un par rapport à l'autre perpendiculairement à une direction longitudinale des fibres optiques (100, 101) avec une précision de réglage qui est supérieure à 1 micron.

3. Appareil selon l'une des revendications 1 ou 2, dans lequel la mémoire (420) contient un tableau mémorisé dans lequel la relation entre des valeurs de décalage possible des extrémités de la première et de la deuxième fibre optique et de temps de soudage affecté est mémorisée.

4. Appareil selon l'une des revendications 1 ou 2, dans lequel la mémoire (420) contient une directive de calcul par laquelle une relation entre des valeurs de décalage possible des extrémités de la première et de la deuxième fibre optique et de temps de soudage affecté est donnée.

5. Appareil selon l'une des revendications 1 à 4, dans lequel la mémoire (420) contient plusieurs desdites relations, chacune des relations étant affectée à une autre atténuation, et un dispositif de saisie (413) étant prévu pour une valeur d'atténuation que la liaison terminée est censée atteindre ou ne pas dépasser, ou chacune des relations étant affectée à un autre courant d'alimentation du dispositif thermique (301, 302) et une des relations étant sélectionnée.

6. Appareil selon l'une des revendications 1 à 5, dans lequel le dispositif thermique présente une paire d'électrodes (301, 302) par laquelle un arc électrique (303) ou une décharge luminescente (303) est généré(e), ou présente un dispositif laser pour fusionner et lier des extrémités de la première et de la deuxième fibre optique, la durée pendant laquelle du courant est amené pour former un arc électrique ou une décharge luminescente ou un faisceau de lumière laser étant commandée par un dispositif de commande (407).

7. Appareil selon l'une des revendications 1 à 6, dans lequel le dispositif d'observation comprend au moins une caméra (401, 402) pour déterminer le décalage (D1) des contours extérieurs (108, 109) de la première et de la deuxième fibre optique à partir d'une ou à partir d'au moins deux directions différentes.

8. Procédé pour la liaison thermique d'extrémités respectives d'au moins deux fibres optiques (100, 101), comprenant:

positionnement des extrémités d'une première et d'une deuxième fibre optique (100, 101) les unes par rapport aux autres de sorte à permettre une liaison par action de chaleur;
prise d'une image (403, 404) des extrémités de la première et de la deuxième fibre optique;
détermination d'un décalage (D1) entre les extrémités de la première et de la deuxième fibre optique (100, 101);
**caractérisé par** la sortie d'une valeur pour un temps de soudage à partir d'une mémoire (420), par laquelle une dépendance entre un décalage possible et un temps de soudage affecté est mis à disposition, la relation prédéfinie étant mémorisée dans la mémoire (420) de telle façon qu'en cas de décalage possible plus élevé, une valeur plus élevée pour le temps de soudage soit donné;
et l'activation d'une source de chaleur (301, 302) en fonction de la valeur pour le temps de soudage, pour lier les extrémités de la première et de la deuxième fibre optique.

9. Procédé selon la revendication 8, dans lequel la source de chaleur (301, 302) est exploitée pendant le temps de soudage pour lier les extrémités de la première et de la deuxième fibre optique.

10. Procédé selon la revendication 9, dans lequel, pendant le temps de soudage, une paire d'électrodes (301, 302) est alimentée en courant pour générer un arc électrique (303) ou une décharge luminescente (303) ou un faisceau laser est généré ou un dispositif électrique de chauffage par résistance est alimenté en courant.

11. Procédé selon l'une des revendications 8 à 10, dans lequel un tableau qui indique une relation entre un décalage possible et un temps de soudage affecté pour l'exploitation de la source de chaleur est mis à disposition dans la mémoire (420), ou contient une directive de calcul à partir de laquelle un temps de soudage affecté est calculé pour l'exploitation de la source de chaleur (301, 302) suite à la saisie du décalage déterminé.

12. Procédé selon la revendication 11, dans lequel on saisit une atténuation souhaitée à atteindre pour une liaison entre la première et la deuxième fibre optique et on sélectionne un de plusieurs tableaux en fonction de l'atténuation saisie, chacun des plusieurs tableaux contenant ladite relation pour une autre atténuation.

13. Procédé selon l'une des revendications 8 à 12, dans lequel, pour déterminer le décalage (D1), on constate la distance entre des contours extérieurs (108, 109) des extrémités de la première et de la deuxième fibre optique (100, 101).

14. Procédé selon l'une des revendications 8 à 12, dans lequel, suite à l'étape d'activation d'une source de chaleur, la source de chaleur est exploitée par impulsions et dans lequel le nombre d'impulsions est défini en fonction du décalage déterminé et comprend de préférence deux ou trois impulsions.

FIG 1

EP 2 067 069 B1

FIG 2

FIG 3

## FIG 4

Schweißstrom

△ 15,0 mA    ◆ 14,0 mA    ■ 13,0 mA

## FIG 5

| Faserversatz [μm] | Schweißzeit [s] |
|---|---|
| 0 | 3,0 |
| 1 | 3,3 |
| 2 | 3,6 |
| 3 | 4,0 |
| 4 | 4,3 |
| 5 | 4,6 |
| 6 | 4,9 |
| 7 | 5,2 |
| 8 | 5,6 |
| 9 | 5,9 |
| 10 | 6,2 |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007019843 A
- US 6230522 B
- GB 2420633 A
- DE 102005038937